# EUROPEAN PATENT SPECIFICATION

(11) **EP 3 023 441 B1**
(45) Date of publication and mention of the grant of the patent: **06.03.2019**
(21) Application number: 14825965.8
(22) Date of filing: 07.07.2014
(51) Int. Cl.: C08F 2/26, C08F 14/18

(54) **METHOD FOR PRODUCING AQUEOUS DISPERSION OF FLUORINE-CONTAINING POLYMER, AQUEOUS DISPERSION OF FLUORINE-CONTAINING POLYMER, AND FLUORINE-CONTAINING POLYMER**
VERFAHREN ZUR HERSTELLUNG EINER WÄSSRIGEN DISPERSION AUS FLUORHALTIGEM POLYMER, WÄSSRIGE DISPERSION AUS FLUORHALTIGEM POLYMER UND FLUORHALTIGES POLYMER
PROCÉDÉ POUR LA PRODUCTION DE DISPERSION AQUEUSE DE POLYMÈRE CONTENANT DU FLUOR, DISPERSION AQUEUSE DE POLYMÈRE CONTENANT DU FLUOR ET POLYMÈRE CONTENANT DU FLUOR

(30) Priority: 18.07.2013 JP 2013149660
(43) Date of publication of application: 25.05.2016
(73) Proprietor: AGC Inc., Tokyo 100-8405 (JP)
(72) Inventor: TOYODA, Mizuna, Tokyo 100-8405 (JP); NAGAI, Hiroki, Tokyo 100-8405 (JP)
(74) Representative: Müller-Boré & Partner Patentanwälte PartG mbB
(86) International application number: PCT/JP2014/068087
(87) International publication number: WO 2015/008649

(56) References cited:
- EP-A1- 2 383 302
- EP-A1- 2 418 245
- EP-A1- 2 911 225
- WO-A1-2014/061803
- CN-A- 1 362 422
- JP-A- S63 191 808
- JP-A- 2003 327 708
- JP-A- 2012 092 285
- JP-A- 2013 542 308
- US-A1- 2012 116 003
- SAIWAI SHOBO HENSHUBU: 'Kaimen Kasseizai Yoeki-chu no Micelle Keisei ni Tsuite' KAIMEN KASSEIZAI KENKYU 2, SAIWAI SHOBO 25 March 1963, pages 119 - 121, XP008182734

## Description

The present invention relates to a method for producing an aqueous fluorinated polymer dispersion. Furthermore, there is described an aqueous fluorinated polymer dispersion, and a fluorinated polymer.

A fluorinated polymer has excellent chemical resistance, solvent resistance, heat resistance, etc., and by virtue of such characteristics, used as a material for various products in a wide industrial field of the automobile industry, the semiconductor industry, the chemical industry, the coating industry, etc.

Heretofore, for production of a fluorinated polymer, a method of subjecting a monomer containing a fluorinated monomer to emulsion polymerization in an aqueous medium has been widely used. With respect to the emulsifier used in such a method, various proposals have been made (for example, Patent Documents 1 and 2), and ammonium perfluorooctanoate (hereinafter sometimes referred to as "APFO") has been widely used as an emulsifier with which a fluorinated polymer having a high molecular weight can be produced.

However, influences of APFO over the environment has been pointed out. Accordingly, environmentally-compatible fluorinated emulsifiers (for example, Patent Document 3) and various hydrocarbon emulsifiers have been studied. As a hydrocarbon emulsifier, for example, Patent Document 4 proposes dioctyl sulfosuccinate.

Patent Document 5 discloses a method for manufacturing a polytetrafluoroethylene-containing mixed powder and a thermoplastic resin composition. Patent Document 6 describes an additive for thermoplastic resin and a method for producing same, a thermoplastic resin composition and a molded article. Patent Document 7 discloses a method for producing a binder composition for electrical storage devices.
Patent Document 1: U.S. Patent No. 3,271,341
Patent Document 2: JP-A-2002-317003
Patent Document 3: Japanese Patent No. 5,061,446
Patent Document 4: JP-A-2012-92285
Patent Document 5: JP-A-2003-327708
Patent Document 6: EP 2 418 245 A1
Patent Document 7: EP 2 911 225 A1

However, according to studies by the present inventors, a fluorinated polymer having a high molecular weight could not be obtained when dioctyl sulfosuccinate was used as an emulsifier.

Under these circumstances, the object of the present invention is to provide a method for producing a stable aqueous fluorinated polymer dispersion in which a fluorinated polymer having a high molecular weight is dispersed with excellent productivity. Moreover, there is described an aqueous fluorinated polymer dispersion obtained by such a method, and a fluorinated polymer.

The present invention provides the method for producing an aqueous fluorinated polymer dispersion, having the following constitutions [1] to [7].
[1] A method for producing an aqueous fluorinated polymer dispersion, which comprises subjecting a monomer containing at least one fluorinated monomer to emulsion polymerization in the presence of a hydrocarbon anionic emulsifier having a critical micelle concentration of at most 0.09 mass%, as measured at 25°C by the surface tension method, in an aqueous medium to produce an aqueous dispersion of a fluorinated polymer,
   wherein the hydrocarbon anionic emulsifier is at least one member selected from the group consisting of a polyoxyethylene alkyl ether sulfate and a dialkyl sulfosuccinate, represented by the following formula (1) or (2):

   R*^{α}*O(CH₂CH₂O)ₘSO₃⁻M*_{α}*⁺ (1)

   wherein R^{α} is a C₄₋₂₄ alkyl group, m is an integer of from 2 to 20, and M_{α}⁺ is a cation; 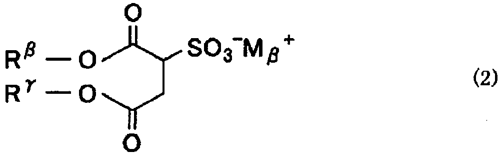
   wherein each of R^{β} and R^{γ} which are independent of each other, is a cyclic C₄₋₁₂ alkyl group, and M_{β}⁺ is a cation,
   wherein the hydrocarbon anionic emulsifier is not sodium dicyclohexyl sulfosuccinate.
[2] The method for producing an aqueous fluorinated polymer dispersion according to the above [1], wherein the hydrocarbon anionic emulsifier is a polyoxyethylene alkyl ether sulfate represented by the following formula (1):

   R*^{α}*O(CH₂CH₂O)ₘSO₃⁻M*_{α}*⁺ (1)

   wherein R^{α} is a C₄₋₂₄ alkyl group, m is an integer of from 2 to 20, and M_{α}⁺ is a cation.
[3] The method for producing an aqueous fluorinated polymer dispersion according to the above [1] or [2], wherein the monomer contains the fluorinated monomer and as the case requires, an olefin, and the fluorinated monomer is at least one member selected from the group consisting of tetrafluoroethylene, vinylidene fluoride, hexafluoropropylene, a perfluoroalkyl vinyl ether and chlorotrifluoroethylene.
[4] The method for producing an aqueous fluorinated polymer dispersion according to the above [3], wherein the monomer contains tetrafluoroethylene and propylene.
[5] The method for producing an aqueous fluorinated polymer dispersion according to any one of the above [1] to [4], wherein the fluorinated polymer is a fluorinated elastic polymer.
[6] The method for producing an aqueous fluorinated polymer dispersion according to the above [5], wherein the storage elastic modulus G' of the fluorinated elastic polymer is at least 530 kPa.
[7] The method for producing an aqueous fluorinated polymer dispersion according to any one of the above [1] to [6], wherein the amount of the hydrocarbon anionic emulsifier used is from 0.001 to 5 parts by mass per 100 parts by mass of the aqueous medium.

According to the production method of the present invention, a stable aqueous fluorinated polymer dispersion in which a fluorinated polymer having a high molecular weight is dispersed, can be produced with excellent productivity.

The aqueous fluorinated polymer dispersion produced by the method of the present invention contains a fluorinated polymer having a high molecular weight, and is excellent in the stability.

The method for producing an aqueous fluorinated polymer dispersion of the present invention is a method for producing an aqueous dispersion (latex) of a fluorinated polymer, which comprises subjecting a monomer containing at least one fluorinated monomer to emulsion polymerization in the presence of a hydrocarbon anionic emulsifier having a critical micelle concentration of at most 0.09 mass% in an aqueous medium.

### <Monomer>

As the monomer, a fluorinated monomer and as the case requires, another monomer (such as an olefin) are used. The composition of the monomer is determined depending upon the type of the fluorinated polymer to be produced.

### (Fluorinated monomer)

The fluorinated monomer is preferably at least one member selected from the group consisting of monofluoroethylene, vinylidene fluoride (hereinafter sometimes referred to as "VDF"), trifluoroethylene, tetrafluoroethylene (hereinafter sometimes referred to as "TFE"), 3,3,3-trifluoropropylene, pentafluoropropylene, 2,2,2-trifluoromethyl-3,3,3-trifluoropropylene, hexafluoropropylene (hereinafter sometimes referred to as "HFP"), chlorotrifluoroethylene (hereinafter sometimes referred to as "CTFE"), polyfluoroalkylethylene, a perfluoroalkyl vinyl ether (hereinafter sometimes referred to as "PAVE") represented by CF₂=CFOR^{f} (wherein R^{f} is a C₁₋₁₆ perfluoroalkyl group which may contain an etheric oxygen atom), perfluoro(2,2-dimethyl-1,3-dioxole), perfluoro(4-alkyl-1,3-dioxole) and CF₂=CFO(CF₂)ₙCF=CF₂ (wherein n is 1 or 2).

R^{f} in CF₂=CFOR^{f} is preferably a C₁₋₁₀ perfluoroalkyl group which may contain an etheric oxygen atom, whereby flexibility of the obtainable polymer will improve, more preferably a C₁₋₈ perfluoroalkyl group. The perfluoroalkyl group may be linear, branched or cyclic. R^{f} may, for example, be specifically CF₃, C₂F₅, CF₃CF₂CF₂, (CF₃)₂CFCF₂CF₂, CF₃CF₂OCF₂CF₂ or CF₃CF₂CF₂OCF(CF₃)CF₂.

The polyfluoroalkylethylene is preferably a compound represented by CH₂=CR¹-(CF₂)ₐR² (wherein each of R¹ and R² which are independent of each other, is a hydrogen atom or a fluorine atom, and a is an integer of from 1 to 12). The compound may, for example, be specifically CF₃CF₂CH=CH₂, CF₃CF₂CF₂CF₂CH=CH₂, CF3CF2CF2CF2CF2CF2CH=CH2, CF3CF2CF2CF2CF=CH2 or CF2HCF2CF2CF=CH2. Among them, more preferred is a monomer wherein R¹ is a hydrogen atom and R² is a fluorine atom, particularly preferred is CF₃CF₂CF₂CF₂CH=CH₂ or CF3CF2CF2CF2CF2CF2CH=CH2.

### (Another monomer (such as olefin))

The monomer used in the present invention preferably contains another monomer in addition to the above fluorinated monomer.

Such another monomer is preferably a hydrocarbon olefin such as ethylene (hereinafter sometimes referred to as "E"), propylene (hereinafter sometimes referred to as "P") or butene. By using P, rubber physical properties may be imparted to the obtainable fluorinated polymer. By using E, resin properties such as melt moldability, melting point and mechanical physical properties may be imparted to the obtainable fluorinated polymer.

Such an olefin is preferably E or P. In a case where a rubber-like fluorinated polymer is to be obtained, P is more preferred.

In a case where the fluorinated monomer and the olefin are used in combination, the fluorinated monomer is preferably at least one member selected from the group consisting of TFE, VDF, HFP, PAVE and CTFE in view of excellent polymerizability of the fluorinated polymer, more preferably at least one member selected from the group consisting of TFE, PAVE and CTFE.

The proportion of the fluorinated monomer to the olefin is determined depending upon the type of the fluorinated polymer to be produced.

### <Emulsion polymerization>

### (Hydrocarbon anionic emulsifier)

In the present invention, emulsion polymerization of the monomer is carried out by using a hydrocarbon anionic emulsifier having a critical micelle concentration (hereinafter sometimes referred to as "CMC") of at most 0.09 mass%. By using the hydrocarbon anionic emulsifier having CMC within the above range, the amount of such a hydrocarbon anionic emulsifier used can be reduced. Accordingly, chain transfer by the hydrocarbon anionic emulsifier during polymerization can be suppressed, and a fluorinated polymer having a high molecular weight can be produced. Further, a stable aqueous fluorinated polymer dispersion in which a fluorinated polymer having a high molecular weight is dispersed can be produced. The lower limit of CMC of the hydrocarbon anionic emulsifier is preferably 0.0001 mass%, whereby a more stable aqueous fluorinated polymer dispersion can be produced, more preferably 0.001 mass%.

CMC means the minimum concentration necessary for the emulsifier (hereinafter sometimes referred to as "surfactant") to form micelles. The dissolved state of the surfactant in the aqueous solution varies depending upon the concentration of the surfactant in the aqueous solution, and at a concentration higher than a certain concentration, molecules of the surfactant associate with one another to form thermodynamically stable micelles. The lowest concentration at which the micelles are formed is the CMC.

As a representative method for measuring CMC, an electric conductivity method, a viscosity method, a dye method, a surface tension method, a light scattering method or a solubilization method may, for example, be mentioned, and in this specification, the CMC means a value measured by the surface tension method (25°C).

In the present invention, among the hydrocarbon anionic emulsifiers, a hydrocarbon anionic emulsifier having CMC of at most 0.09 mass% is used.

The hydrocarbon anionic emulsifier is at least one member selected from the group consisting of a polyoxyethylene alkyl ether sulfate and a dialkyl sulfosuccinate, preferably a polyoxyethylene alkyl ether sulfate or a dialkyl sulfosuccinate.

The salt may, for example, be ammonium salt, an alkali metal salt (such as sodium salt or potassium salt) or an amine salt, and is preferably an alkali metal salt.

The hydrocarbon anionic emulsifier is a polyoxyethylene alkyl ether sulfate represented by the following formula (1) or a dialkyl sulfosuccinate represented by the following formula (2), which is excellent in the emulsifying property and with which a fluorinated polymer having a high molecular weight tends to be obtained.

R*^{α}*O(CH₂CH₂O)ₘSO₃⁻M*_{α}*⁺ (1)

In the formula (1), R^{α} is a C₄₋₂₄ alkyl group, m is an integer of from 2 to 20, and M_{α}⁺ is a cation. m is preferably from 2 to 15, more preferably from 4 to 10.

R^{α} may be linear, branched or cyclic. R° preferably has from 4 to 20, more preferably from 8 to 18, most preferably from 10 to 16 carbon atoms.

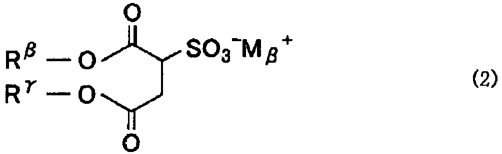

In the formula (2), each of R^{β} and R^{γ} which are independent of each other, is a cyclic C₄₋₁₂ alkyl group, and M_{β}⁺ is a cation. R^{β} and R^{γ} each independently more preferably has from 5 to 10 carbon atoms.

The hydrocarbon anionic emulsifier is not sodium dicyclohexyl sulfosuccinate.

In the emulsion polymerization, the amount of the hydrocarbon anionic emulsifier used is preferably from 0.001 to 5 parts by mass, more preferably from 0.01 to 3 parts by mass, most preferably from 0.01 to 2 parts by mass per 100 parts by mass of the aqueous medium, whereby the obtainable fluorinated polymer has a high molecular weight. Further, it is preferably from 0.01 to 3 parts by mass, more preferably from 0.1 to 2 parts by mass per 100 parts by mass of the entire amount of the monomer, whereby the obtainable aqueous fluorinated polymer dispersion is excellent in the stability.

### (Aqueous medium)

The aqueous medium used in the emulsion polymerization is preferably water or a mixture of water and a water-soluble organic solvent. As the water soluble organic solvent, a known solvent may be properly used. The water soluble organic solvent may, for example, be specifically an alcohol such as tert-butanol, propylene glycol, dipropylene glycol, dipropylene glycol monomethyl ether or tripropylene glycol, preferably tert-butanol, propylene glycol, dipropylene glycol or dipropylene glycol monomethyl ether, particularly preferably tert-butanol.

In a case where the water soluble organic solvent is used, the content of the water soluble organic solvent in the aqueous medium is preferably low. Specifically, the content of the water soluble organic solvent is preferably less than 1 part by mass, more preferably at most 0.5 part by mass, most preferably at most 0.1 part by mass, per 100 parts by mass of water.

The aqueous medium preferably contains no water soluble organic solvent.

### (Another component)

In the emulsion polymerization, a radical polymerization initiator, a chelating agent, a pH adjusting agent, etc. may be used.

As the radical polymerization initiator, a water soluble initiator is preferably used.

The water soluble initiator may, for example, be a persulfate salt (such as ammonium persulfate or an alkali metal persulfate such as sodium persulfate or potassium persulfate); or an organic initiator (such as an organic peroxide such as disuccinic peroxide, or azobisisobutylamidine dihydrochloride). Among them, preferred is a persulfate such as ammonium persulfate.

The radical polymerization initiator is preferably used as a redox polymerization initiator as combined with an oxidation/reduction catalyst (also called a redox catalyst). The redox polymerization initiator may, for example, be a combination of a persulfate with a reducing agent. The reducing agent may, for example, be a metal sulfinate such as sodium hydroxymethanesulfinate dihydrate (hereinafter sometimes referred to as Rongalite).

The radical polymerization initiator used as the redox polymerization initiator is preferably, for example, a polymerization initiator which allows monomers such as TFE and P to be polymerized at a polymerization temperature of from 0°C to 50°C.

In the case of the redox polymerization initiator, it is preferred that as a third component, a small amount of iron, an iron salt such as ferrous salt, silver sulfate or the like coexists, more preferably a water soluble iron salt coexists.

The water soluble iron salt may, for example, be ferrous sulfate, ferric sulfate, ferrous nitrate, ferric nitrate, ferrous chloride, ferric chloride, ferrous ammonium sulfate or ferric ammonium sulfate.

Further, to the redox polymerization initiation system, it is particularly preferred to add a chelating agent. The chelating agent is preferably disodium ethylenediaminetetraacetate dihydrate.

As a specific example of the redox polymerization initiator, preferred is a system of ammonium persulfate, Rongalite, disodium ethylenediaminetetraacetate dihydrate and ferrous sulfate in combination, a system of potassium permanganate and oxalic acid in combination, a system of potassium bromate and ammonium sulfite in combination, or a system of ammonium persulfate and ammonium sulfite in combination. Among them, more preferred is a system of ammonium persulfate, Rongalite, disodium ethylenediaminetetraacetate dihydrate and ferrous sulfate in combination, whereby an appropriate polymerization rate is obtained.

In the redox polymerization initiator, the amount of the persulfate used is preferably from 0.0001 to 3 parts by mass, more preferably from 0.001 to 2 parts, particularly preferably from 0.05 to 1 part by mass per 100 parts by mass of the entire mass of the monomers used for the emulsion polymerization. The amount of the reducing agent used is preferably from 0.001 to 3 parts by mass, more preferably from 0.01 to 1 part by mass, particularly preferably from 0.1 to 0.5 part by mass per 100 parts by mass of the entire mass of the monomers used for the emulsion polymerization. Further, the amount of the third component used is preferably from 0.0001 to 0.3 part by mass, more preferably from 0.001 to 0.1 part by mass, particularly preferably from 0.01 to 0.1 part by mass per 100 parts by mass of the entire mass of the monomers used for the emulsion polymerization.

The pH adjusting agent is preferably used for the purpose of adjusting the polymerization rate, improving the stability of an obtainable aqueous fluorinated polymer dispersion, etc. As the pH adjusting agent, a known pH adjusting agent used for the emulsion polymerization may be used, and an inorganic salt is preferred. The pH adjusting agent may, for example, be a phosphate such as disodium hydrogenphosphate or sodium dihydrogenphosphate; or a carbonate such as sodium hydrogencarbonate or sodium carbonate. The phosphate is preferably disodium hydrogenphosphate dihydrate or disodium hydrogenphosphate dodecahydrate. To achieve a desired pH, a base such as sodium hydroxide or potassium hydroxide; or an acid such as sulfuric acid, hydrochloric acid or nitric acid may be used in combination.

### (Operation procedure for emulsion polymerization)

As the operation procedure for the emulsion polymerization, for example, the following known operation procedure may be employed.

A pressure resistant reactor is deaerated, and to the reactor, the aqueous medium, the hydrocarbon anionic emulsifier, the radical polymerization initiator and as the case requires, the redox catalyst, the third component and the pH adjusting agent are charged. The pH in the aqueous medium is preferably from 4 to 12, more preferably from 6 to 11. Then, the mixture is heated to a predetermined polymerization temperature, and a monomer to be initially charged is introduced. Then, the reducing agent is added to initiate the polymerization, and monomers are supplied along with a decrease in the pressure.

Once the polymerization reaction of the monomer begins, the pressure in the reactor starts being decreased. Thus, initiation of the polymerization reaction (starting point of the reaction time) is confirmed by a pressure decrease in the reactor.

The polymerization temperature is preferably from 0°C to 100°C, more preferably from 10°C to 90°C, most preferably from 20°C to 60°C. When the polymerization temperature is within such a range, the polymerization rate is appropriate and is easily controlled, and the obtainable aqueous fluorinated polymer dispersion is excellent in the productivity and the stability.

The polymerization pressure is preferably from 1.0 to 10 MPaG, more preferably from 1.5 to 5.0 MPaG, most preferably from 1.7 to 3.0 MPaG. If the polymerization pressure is less than 1.0 MPaG, the polymerization rate may be low in some cases. When the polymerization pressure is within the above range, the polymerization rate is appropriate and is easily controlled, and the obtainable aqueous fluorinated polymer dispersion is excellent in the productivity. Further, "G" of "MPaG" means a gauge pressure.

After a pressure decrease in the reactor is confirmed, it is preferred to additionally supply the monomer to carry out the polymerization reactor while the predetermined polymerization temperature and the predetermined polymerization pressure are maintained, thereby to form a fluorinated polymer. By gradually supplying the monomer while the polymerization reaction proceeds, dispersion of the copolymer composition of the obtainable fluorinated polymer tends to be decreased, and the quality of the fluorinated polymer will be stabilized.

Once the total amount of the monomer additionally supplied during the polymerization reaction reached a predetermined value, the reactor is cooled to terminate the polymerization reaction (end point of the reaction time) to obtain an aqueous fluorinated polymer dispersion.

The aqueous fluorinated polymer dispersion thus obtained contains particles of the fluorinated polymer and the emulsifier in the aqueous medium.

The total amount of the monomer additionally supplied during the polymerization reaction is considered to be equal to the total amount of the monomer consumed by the polymerization reaction and to be equal to the total amount of the fluorinated polymer formed by the emulsion polymerization.

### <Aqueous fluorinated polymer dispersion>

The solid content concentration of the above-obtained aqueous fluorinated polymer dispersion is preferably from 10 to 45 mass%, more preferably from 15 to 40 mass%, most preferably from 20 to 35 mass%. By the solid content concentration being within the above range, when such an aqueous fluorinated polymer dispersion is used as a binder (for example, a device binder for storage), a favorable viscosity tends to be obtained, and excellent coating property will be obtained.

### <Agglomeration and drying>

The aqueous fluorinated polymer dispersion is agglomerated and dried by a known method to isolate the fluorinated polymer.

The agglomeration method may, for example, be a method of adding a metal salt for salting out, a method of adding an inorganic acid such as hydrochloric acid, a method by mechanical shearing, or a method by freezing/defrosting. The metal salt for salting out may, for example, be calcium chloride, sodium chloride, potassium chloride or aluminum potassium sulfate.

The fluorinated polymer obtained by agglomeration and drying is sold as a product in the form of crumbs or a plate.

### <Fluorinated polymer>

The fluorinated polymer may be a fluorinated elastic polymer or a fluorinated resin. The fluorinated elastic polymer is a fluorinated polymer popularly called a fluororubber or a fluorinated elastomer.

### (Fluorinated elastic polymer)

The fluorinated elastic polymer may, for example, be specifically a VDF/HFP copolymer, a VDF/HFP/TFE copolymer, a TFE/P copolymer, a TFE/HFP copolymer, a TFE/P/VDF copolymer, a TFE/MVE copolymer, a TFE/EVE copolymer, a TFE/BVE copolymer, a TFE/EVE/BVE copolymer, a TFE/PAVE copolymer, a VDF/PAVE copolymer, an E/PAVE copolymer, an E/HFP copolymer or a VDF/chlorotrifluoroethylene copolymer.

The fluorinated elastic polymer is preferably a VDF/HFP copolymer, a VDF/HFP/TFE copolymer, a TFE/P copolymer or a TFE/PAVE copolymer in view of excellent chemical resistance such as oil resistance or alkali resistance, heat resistance and weather resistance, more preferably a VDF/HFP copolymer, a VDF/HFP/TFE copolymer or a TFE/P copolymer, most preferably a TFE/P copolymer.

The VDF/HFP copolymer is preferably one having a molar ratio of units based on VDF/units based on HFP of from 45/55 to 85/15, more preferably from 50/50 to 80/20.

The VDF/HFP/TFE copolymer is preferably one having a molar ratio of units based on VDF/units based on HFP/units based on TFE of 40 to 80/10 to 35/10 to 25, more preferably 55 to 65/20 to 25/15 to 20.

The TFE/PAVE copolymer is preferably one having a molar ratio of units based on TFE/units based on PAVE of from 85/15 to 25/75, more preferably from 75/2 to 40/60.

The TFE/P copolymer is preferably one having a molar ratio of units based on TFE/units based on P of from 40/60 to 75/25, more preferably from 50/50 to 75/25, further preferably from 53/47 to 75/25. Particularly, for application for which heat resistance and chemical resistance are required, the lower limit of the molar ratio of units based on TFE/units based on P is preferably 60/40, more preferably 63/37, most preferably 65/35.

The TFE/P copolymer may contain units based on another monomer in addition to the units based on TFE and the units based on P. The content of units based on another monomer is, in a case where the TFE/P copolymer contains units based on another monomer, preferably from 0.1 to 30 mol%, more preferably from 0.1 to 10 mol% based on all the units based on the monomers in the TFE/P copolymer.

Such another monomer may, for example, be a fluoroolefin such as monofluoroethylene, VDF, trifluoroethylene, 3,3,3-trifluoropropylene, pentafluoropropylene, HFP or 2,2,2-trifluoromethyl-3,3,3-trifluoropropylene; a PAVE such as perfluoro(methyl vinyl ether), perfluoro(ethyl vinyl ether), perfluoro(propyl vinyl ether), perfluoro(3,6-dioxa-5-methyl-octene) or perfluoro(ethoxyethyl vinyl ether); a hydrocarbon olefin (excluding P) such as E, 1-butene or isobutylene; an alkyl vinyl ether such as methyl vinyl ether, ethyl vinyl ether, butyl vinyl ether or cyclohexyl vinyl ether; a vinyl ester such as vinyl acetate or vinyl propionate; or vinyl chloride, vinylidene chloride or trifluorostyrene.

Such another monomer is preferably a fluoroolefin or a PAVE, more preferably VDF or a PAVE. The PAVE is more preferably perfluoro(methyl vinyl ether) or perfluoro(propyl vinyl ether).

The TFE/P copolymer is preferably a copolymer containing no unit based on another monomer, in view of excellent alkali resistance and rubber physical properties.

The storage elastic modulus G' of the fluorinated elastic polymer s preferably at least 530 kPa, more preferably at least 550 kPa, further preferably at least 580 kPa, most preferably at least 600 kPa. The storage elastic modulus G' is a measure of the molecular weight of a fluorinated elastic polymer, and a fluorinated elastic polymer having a high molecular weight has a high storage elastic modulus G'. A fluorinated elastic polymer having a storage elastic modulus G' within the above range is excellent in the adhesion to a metal, the mechanical properties, the chemical resistance and the heat resistance, and is suitably used, for example, for a binder such as a device binder for storage. The upper limit of the storage elastic modulus G' of the fluorinated elastic polymer is usually 700 kPa.

In this specification, the storage elastic modulus G' is a value measured in accordance with ASTM D6204.

The fluorinated elastic copolymer may be formed into a crosslinked rubber by a crosslinking reaction. Such a crosslinked rubber is suitable as a material of an O-ring, a sheet, a gasket, an oil seal, a diaphragm, or a V-ring. Further, it may be applied to a heat resistant chemical resistant sealing material, a heat resistant oil resistant sealing material, an electric wire covering material, a sealing material for a semiconductor device, an anti-corrosion rubber coating, a sealing material for a urea-resistant grease, etc.

### (Fluorinated resin)

The fluorinated resin may be a melt-moldable fluorinated resin. The melt-moldable fluorinated resin may, for example, be specifically a TFE/HFP copolymer (hereinafter sometimes referred to as "FEP"), a TFE/perfluoro(propyl vinyl ether) copolymer (hereinafter sometimes referred to as "PFA"), a TFE/E copolymer (hereinafter sometimes referred to as "ETFE"), polyvinylidene fluoride (hereinafter sometimes referred to as "PVDF"), a chlorotrifluoroethylene/E copolymer (hereinafter sometimes referred to as "ECTFE"), a TFE/HFP/VDF copolymer (hereinafter sometimes referred to as "THV"), a TFE/HFP/E copolymer (hereinafter sometimes referred to as "EFEP"), a TFE/HFP/PAVE copolymer (hereinafter sometimes referred to as "EPA") or a chlorotrifluoroethylene/E copolymer (hereinafter sometimes referred to as ECTFE).

As the composition of FEP, the molar ratio of TFE/HFP is preferably from 97/3 to 80/20, more preferably from 95/5 to 90/10.

As the composition of PFA, the molar ratio of TFE/perfluoro(propyl vinyl ether) is preferably from 99.9/0.1 to 95/5, more preferably from 99.7/0.3 to 97/3.

As the composition of ETFE, the molar ratio of TFE/E is preferably from 70/30 to 40/60, more preferably from 65/35 to 50/50.

As the composition of THV, the molar ratio of TFE/HFP/VDF is preferably 25 to 85/5 to 15/10 to 60, more preferably 35 to 75/5 to 15.

As the composition of EFEP, the molar ratio of TFE/HFP/E is preferably 20 to 75/5 to 20/20 to 60, more preferably 35 to 65/5 to 15/30 to 50.

As the composition of EPA, the molar ratio of TFE/HFP/PAVE is preferably 82 to 96.9/3 to 15/0.1 to 3, more preferably 88 to 94.8/5 to 10/0.2 to 2. As the composition of ECTFE, the molar ratio of chlorotrifluoroethylene/E is preferably from 70/30 to 40/60, more preferably from 65/35 to 50/50.

As the measure of the molecular weight of the melt-moldable fluorinated resin, MFR (melt flow rate) is commonly used. A lower MFR means a higher molecular weight. As the MFR measurement temperature, MFR may be measured at a temperature of at least the melting point and at most the decomposition point, however, a constant temperature determined by the type of the fluorinated resin is usually employed. For example, the measurement temperature is 372°C for PFA, FEP and EPA, 297°C for ETFE and ECTFE, 265°C for THV, 230°C for EFEP, and 235°C for PVDF. The range of MFR is preferably from 0.1 to 100 g/min, more preferably from 0.5 to 50 g/min, most preferably from 1 to 30 g/min.

The tensile strength of the melt-moldable fluorinated resin at room temperature is preferably at least 10 MPa, more preferably at least 15 MPa, most preferably at least 20 MPa. The tensile elongation at room temperature is preferably at least 100%, more preferably at least 150%, most preferably at least 200%.

As described above, according to the method for producing an aqueous fluorinated polymer dispersion by subjecting a monomer containing at least one fluorinated monomer to emulsion polymerization in the presence of a hydrocarbon anionic emulsifier having CMC of at most 0.09 mass% in an aqueous medium, a stable aqueous fluorinated polymer dispersion in which a fluorinated polymer having a high molecular weight is dispersed can be produced. Further, this method is excellent also in the productivity. The fluorinated elastic polymer having a high molecular weight obtained by the method is excellent in the adhesion to a metal, the mechanical properties, the chemical resistance and the heat resistance, and is suitably used, for example, for a binder such as a device binder for storage. Further, a crosslinked rubber obtained by crosslinking the fluorinated elastic copolymer is suitable as a material of an O-ring, a sheet, a gasket, an oil seal, a diaphragm, a V-ring or the like, and is applicable to a heat resistant chemical resistance sealing material, a heat resistant oil resistant sealing material, an electric wire covering material, a sealing material for a semiconductor device, an anti-corrosion rubber coating, a sealing material for a urea-resistant grease.

### EXAMPLES

Now, the present invention will be described in further detail with reference to Examples and Reference Examples. However, it should be understood that the present invention is by no means restricted thereto.

Measurement methods used in Examples, Reference Examples and Comparative Examples are as follows.

### [Method for measuring composition of fluorinated copolymer]

The composition of the fluorinated polymer was measured by ¹⁹F-NMR analysis, infrared absorption spectrum analysis, fluorine content analysis, etc.

Particularly, with respect to the fluorinated elastic polymer, a measurement sample was prepared and analyzed as follows.

An aqueous dispersion of the fluorinated elastic copolymer was added to a 1.5 mass% aqueous calcium chloride solution for salting out thereby to agglomerate and precipitate the fluorinated elastic polymer, which was washed with deionized water and dried in an oven at 100°C for 15 hours to obtain a fluorinated elastic polymer.

### [Method for measuring storage elastic modulus G' of fluorinated elastic copolymer]

A value measured by using RPA2000 manufactured by Alpha Technologies in accordance with ASTM D6204 at a temperature of 100°C with an amplitude of 0.5 degree at a frequency of 50 cycles per minute was taken as the storage elastic modulus.

### [Polymerization characteristics (polymerization rate (g/L·Hr))

A value obtained by dividing the total amount (g) of monomers additionally injected into a pressure resistant reactor by the unit internal capacity (L) of the pressure-resistant reactor and the unit time (Hr) required for injection is taken as the polymerization rate (g/L·Hr).

### [Example 1]

A stainless steel pressure-resistant reactor having an internal capacity of 3,200 mL equipped with a stirring anchor blade was deaerated, and to the reactor, 1,700 g of deionized water, 1.61 g as calculated as pure content of sodium polyoxyethylene alkyl ether sulfate (tradename "Newcol 1305-SN", manufactured by Nippon Nyukazai Co., Ltd., CMC=0.008 mass%, corresponding to a compound of the formula (1) wherein R^{α} is an alkyl group having 13 carbon atoms and M_{α}⁺ is sodium ion) as a hydrocarbon anionic emulsifier, 60 g of disodium hydrogenphosphate dodecahydrate and 0.9 g of sodium hydroxide as pH-adjusting agents, and 4.2 g of ammonium persulfate (one hour half-life temperature: 82°C) as a polymerization initiator were added. Further, an aqueous solution having 0.4 g of disodium ethylenediaminetetraacetate dihydrate (hereinafter referred to as EDTA) and 0.3 g of ferrous sulfate heptahydrate dissolved in 200 g of deionized water was added to the reactor. The pH of the aqueous medium in the reactor at this point was 9.2.

Then, at 25°C, monomers (a mixed gas of TFE and P) in a molar ratio of TFE/P=88/12 were injected so that the internal pressure in the reactor would be 2.50 MPaG. The anchor blade was rotated at 300 rpm, and 5 g of a 2.5 mass% aqueous sodium hydroxymethanesulfinate dihydrate of which the pH was adjusted to 10.0 with sodium hydroxide (hereinafter referred to as 2.5 mass% aqueous Rongalite solution) was added to the reaction to initiate the polymerization reaction. From this point forward, a 2.5 mass% aqueous Rongalite solution was continuously added to the reactor by a high pressure pump.

Polymerization was allowed to proceed while the polymerization temperature was maintained at 25°C. Along with the progress of the polymerization, the pressure in the reactor decreased, and at a point when the internal pressure of the reactor decreased to 2.49 MPaG, monomers (a mixed gas of TFE and P) in a molar ratio of TFE/P=56/44 were additionally injected by their own pressure to elevate the internal pressure in the reactor to be 2.51 MPaG. This operation was repeated to maintain the internal pressure in the reactor to be from 2.49 to 2.51 MPaG to continue the polymerization reaction. When the total amount of the monomers (mixed gas of TFE and P) additionally injected reached 800 g, addition of the 2.5 mass% aqueous Rongalite solution was terminated, the internal temperature in the reactor was decreased to 10°C to terminate the polymerization reaction, whereby 2,350 g of an aqueous dispersion containing a fluorinated elastic polymer (A) was obtained. The amount of the 2.5 mass% aqueous Rongalite solution added was 40 g.

In the aqueous dispersion, the fluorinated elastic polymer (A) content was 34 mass%.

The amount of the emulsifier used was 0.2 part by mass per 100 parts by mass of the fluorinated elastic polymer (A).

500 g of the aqueous dispersion was added to 750 g of a 1.5 mass% aqueous calcium chloride solution to agglomerate the aqueous dispersion, whereby a fluorinated elastic copolymer (A) was obtained. The precipitated fluorinated elastic copolymer (A) was separated, washed with 500 g each of ultrapure water three times and dried in an oven at 100°C for 12 hours to obtain 170 g of a white fluorinated elastic copolymer (A).

The fluorinated elastic polymer (A) had a copolymer composition of TFE/P=56/44 (molar ratio) and a storage elastic modulus G' of 605 kPa. The results are shown in Table 1.

### [Reference Example 2]

The polymerization reaction was carried out in the same manner as in Example 1 except that 6.8 g as calculated as pure content of sodium dicyclohexyl sulfosuccinate (tradename "PELEX CS", manufactured by Kao Corporation, CMC: 0.09 mass%, corresponding to a compound of the formula (2) wherein each of R^{β} and R^{γ} is a cyclohexyl group, and M_{β}⁺ is sodium ion) was used instead of 1.61 g of sodium polyoxyethylene alkyl ether sulfate to obtain 2,400 g of an aqueous dispersion of a fluorinated elastic polymer (B).

The content of the fluorinated elastic polymer (B) in the aqueous dispersion was 33 mass%.

The amount of the emulsifier used was 1.4 parts by mass per 100 parts by mass of the fluorinated elastic polymer (B).

500 g of the aqueous dispersion was added to 750 g of a 1.5 mass% aqueous calcium chloride solution to agglomerate the aqueous dispersion thereby to obtain a fluorinated elastic copolymer (B). The precipitated fluorinated elastic copolymer (B) was separated, washed with 500 g each of ultrapure water three times and dried in an oven at 100°C for 12 hours to obtain 165 g of a white fluorinated elastic copolymer (B).

The fluorinated elastic polymer (B) had a copolymer composition of TFE/P=56/44 (molar ratio) and a storage elastic modulus G' of 559 kPa. The results are shown in Table 1.

### [Comparative Example 1]

The polymerization reaction was carried out in the same manner as in Example 1 except that 7.6 g as calculated as pure content of sodium di-2-ethylhexylsulfosuccinate (PELEX OT-P, manufactured by Kao Corporation, CMC: 0.1 mass%, sometimes referred to as "sodium dioctylsulfosuccinate") was used instead of 1.61 g of sodium polyoxyethylene alkyl ether sulfate to obtain an aqueous dispersion of a fluorinated elastic polymer (C).

The content of the fluorinated elastic polymer (C) in the aqueous dispersion was 34 mass%.

500 g of the latex was added to 750 g of a 1.5 mass% aqueous calcium chloride solution to agglomerate the aqueous dispersion, whereby a fluorinated elastic copolymer (C) was obtained. The precipitated fluorinated elastic copolymer (C) was separated, washed with 500 g each of ultrapure water three times and dried in an oven at 100°C for 12 hours to obtain a white fluorinated elastic copolymer (C).

The fluorinated elastic polymer (C) had a copolymer composition of TFE/P=56/44 (molar ratio) and a storage elastic modulus G' of 521 kPa.

### [Comparative Example 2]

An aqueous dispersion of a fluorinated elastic polymer (D) was obtained in the same manner as in Example 1 except that 17.7 g as calculated as pure content of sodium lauryl sulfate (tradename "EMAL 2FG", manufactured by Kao Corporation, CMC: 0.24 mass%) was used instead of 1.61 g of sodium polyoxyethylene alkyl ether sulfate.

The content of the fluorinated elastic polymer (D) in the aqueous dispersion was 34 mass%.

500 g of the aqueous dispersion was added to 750 g of a 1.5 mass% aqueous calcium chloride solution to agglomerate the aqueous dispersion, whereby a fluorinated elastic copolymer (D) was obtained. The precipitated fluorinated elastic copolymer (D) was separated, washed with 500 g each of ultrapure water three times and dried in an oven at 100°C for 12 hours to obtain a white fluorinated elastic copolymer (D).

The fluorinated elastic polymer (D) had a copolymer composition of TFE/P=56/44 (molar ratio) and a storage elastic modulus G' of 402 kPa.

### [Comparative Example 3]

An aqueous dispersion of a fluorinated elastic polymer (E) was obtained in the same manner as in Example 1 except that 16.2 g as calculated as pure content of ammonium lauryl sulfate (tradename "LATEMUL AD-25", manufactured by Kao Corporation, CMC: 0.22 mass%) was used instead of 1.61 g of sodium polyoxyethylene alkyl ether sulfate.

The content of the fluorinated elastic polymer (E) in the aqueous dispersion was 34 mass%.

500 g of the aqueous dispersion was added to 750 g of a 1.5 mass% aqueous calcium chloride solution to agglomerate the aqueous dispersion, whereby a fluorinated elastic copolymer (E) was obtained. The precipitated fluorinated elastic copolymer (E) was separated, washed with 500 g each of ultrapure water three times and dried in an oven at 100°C for 12 hours to obtain a white fluorinated elastic copolymer (E).

The fluorinated elastic polymer (E) had a copolymer composition of TFE/P=56/44 (molar ratio) and a storage elastic modulus G' of 393 kPa.

### [Comparative Example 4]

An aqueous dispersion of a fluorinated elastic polymer (F) was obtained in the same manner as in Example 1 except that 50.2 g as calculated as pure content of sodium alkyl diphenyl ether sulfonate (tradename "PELEX SS-L", manufactured by Kao Corporation, CMC: 0.68 mass%) was used instead of 1.61 g of sodium polyoxyethylene alkyl ether sulfate.

The content of the fluorinated elastic polymer (F) in the aqueous dispersion was 34 mass%.

500 g of the aqueous dispersion was added to 750 g of a 1.5 mass% aqueous calcium chloride solution to agglomerate the aqueous dispersion, whereby a fluorinated elastic copolymer (F) was obtained. The precipitated fluorinated elastic copolymer (F) was separated, washed with 500 g each of ultrapure water three times and dried in an oven at 100°C for 12 hours to obtain a white fluorinated elastic copolymer (F).

The fluorinated elastic polymer (F) had a copolymer composition of TFE/P=56/44 (molar ratio) and a storage elastic modulus G' of 215 kPa.

**[Table 1]**

| | | Example 1 | Reference Example 2 | Comparative Example 1 | Comparative Example 2 | Comparative Example 3 | Comparative Example 4 |
|---|---|---|---|---|---|---|---|
| Hydrocarbon anionic emulsifier | Tradename | Newcol 1305-SN | PELEX CS | PELEX OT-P | EMAL 2FG | LATEMUL AD-25 | PELEX SS-L |
| | Compound name | Sodium polyoxyethylene alkyl ether sulfate | Sodium dicyclohexyl sulfosuccinate | Sodium di-2-ethylhexylsulfosuccinate | Sodium lauryl sulfate | Ammonium lauryl sulfate | Sodium alkyl diphenyl ether sulfonate |
| | CMC (mass%) | 0.008 | 0.09 | 0.1 | 0.24 | 0.22 | 0.68 |
| Polymerization characteristics | Polymerization rate (g/L·Hr) | 80 | 75 | 74 | 72 | 74 | 46 |
| Fluorinated elastic polymer | Type | A | B | C | D | E | F |
| | Storage elastic modulus G' (kPa) | 605 | 559 | 521 | 402 | 393 | 215 |

As shown from the above results, the fluorinated elastic polymers (A) and (B) in Examples 1 and 2 had a sufficient storage elastic modulus and had a high molecular weight. Further, in Examples 1 and Reference Example 2, the polymerization rate at the time of polymerization was high, and excellent productivity was obtained. Whereas the fluorinated elastic polymers (C), (D), (D) and (F) had a low storage elastic modulus and had a low molecular weight.

The fluorinated polymer obtained by the production method of the present invention has a high molecular weight, and is excellent in the adhesion to a metal, the chemical resistance, the heat resistance, the oil resistance, the weather resistance, etc.

The aqueous fluorinated polymer dispersion obtained by the production method of the present invention is applicable to a binder such as a device binder for storage.

The fluorinated elastic copolymer obtained by the production method of the present invention may be formed into a crosslinked rubber by a crosslinking reaction. The crosslinked rubber is suitable for a material of e.g. an O-ring, a sheet, a gasket, an oil seal, a diaphragm or a V-ring, and is applicable to e.g. a heat resistant chemical resistance sealing material, a heat resistant oil resistant sealing material, an electric wire covering material, a sealing material for a semiconductor device, an anti-corrosion rubber coating or a sealing material for a urea-resistant grease.

## Claims

1. A method for producing an aqueous fluorinated polymer dispersion, which comprises subjecting a monomer containing at least one fluorinated monomer to emulsion polymerization in the presence of a hydrocarbon anionic emulsifier having a critical micelle concentration of at most 0.09 mass%, as measured at 25 °C by the surface tension method, in an aqueous medium to produce an aqueous dispersion of a fluorinated polymer,
wherein the hydrocarbon anionic emulsifier is at least one member selected from the group consisting of a polyoxyethylene alkyl ether sulfate and a dialkyl sulfosuccinate, represented by the following formula (1) or (2):
R*^{α}*O(CH₂CH₂O)ₘSO₃⁻M*_{α}*⁺ (1)
wherein R^{α} is a C₄₋₂₄ alkyl group, m is an integer of from 2 to 20, and M_{α}⁺ is a cation; 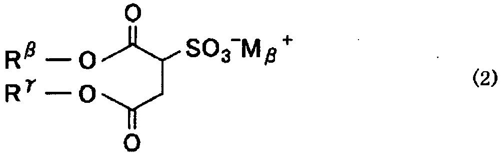
wherein each of R^{β} and R^{γ} which are independent of each other, is a cyclic C₄₋₁₂ alkyl group, and M_{β}⁺ is a cation,
wherein the hydrocarbon anionic emulsifier is not sodium dicyclohexyl sulfosuccinate.

2. The method for producing an aqueous fluorinated polymer dispersion according to Claim 1, wherein the hydrocarbon anionic emulsifier is a polyoxyethylene alkyl ether sulfate represented by the following formula (1):
R*^{α}*O(CH₂CH₂O)ₘSO₃⁻M*_{α}*⁺ (1)
wherein R^{α} is a C₄₋₂₄ alkyl group, m is an integer of from 2 to 20, and M_{α}⁺ is a cation.

3. The method for producing an aqueous fluorinated polymer dispersion according to Claim 1 or Claim 2, wherein the monomer contains the fluorinated monomer and as the case requires, an olefin, and the fluorinated monomer is at least one member selected from the group consisting of tetrafluoroethylene, vinylidene fluoride, hexafluoropropylene, a perfluoroalkyl vinyl ether and chlorotrifluoroethylene.

4. The method for producing an aqueous fluorinated polymer dispersion according to Claim 3, wherein the monomer contains tetrafluoroethylene and propylene.

5. The method for producing an aqueous fluorinated polymer dispersion according to any one of Claims 1 to 4, wherein the fluorinated polymer is a fluorinated elastic polymer.

6. The method for producing an aqueous fluorinated polymer dispersion according to Claim 5, wherein the storage elastic modulus G' of the fluorinated elastic polymer is at least 530 kPa.

7. The method for producing an aqueous fluorinated polymer dispersion according to any one of Claims 1 to 6, wherein the amount of the hydrocarbon anionic emulsifier used is from 0.001 to 5 parts by mass per 100 parts by mass of the aqueous medium.

## Patentansprüche

1. Verfahren zur Herstellung einer wässrigen fluorierten Polymerdispersion, welches das Aussetzen eines Monomers, das mindestens ein fluoriertes Monomer enthält, einer Emulsionspolymerisation in der Gegenwart eines anionischen Kohlenwasserstoffemulgators mit einer kritischen Mizellenkonzentration von höchstens 0,09 Massen-%, gemessen bei 25 °C nach dem Oberflächenspannungsverfahren, in einem wässrigen Medium umfasst, um eine wässrige Dispersion eines fluorierten Polymers herzustellen, wobei der anionische Kohlenwasserstoffemulgator mindestens ein Mitglied ist, ausgewählt aus der Gruppe, bestehend aus einem Polyoxyethylenalkylethersulfat und einem Dialkylsulfosuccinat, dargestellt durch die nachstehende Formel (1) oder (2):
R*^{α}*O(CH₂CH₂O)ₘSO₃⁻M*_{α}*⁺ (1)
wobei R^{α} eine C₄₋₂₄ Alkylgruppe ist, m eine ganze Zahl von 2 bis 20 ist und M_{α}⁺ ein Kation ist; 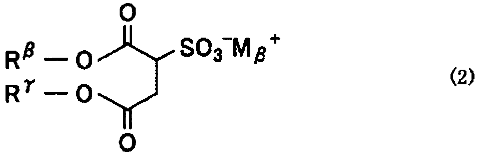
wobei jedes von R^{β} und R^{γ}, die unabhängig voneinander sind, eine cyclische C₄₋₁₂ Alkylgruppe ist, und M_{β}⁺ ein Kation ist,
wobei der anionische Kohlenwasserstoffemulgator nicht Natrium-di-cyclohexylsulfosuccinat ist.

2. Verfahren zur Herstellung einer wässrigen fluorierten Polymerdispersion nach Anspruch 1, wobei der anionische Kohlenwasserstoffemulgator ein Polyoxyethylenalkylethersulfat, dargestellt durch die nachstehende Formel (1), ist:
R*^{α}*O(CH₂CH₂O)ₘSO₃⁻M*_{α}*⁺ (1)
wobei R^{α} eine C₄₋₂₄ Alkylgruppe ist, m eine ganze Zahl von 2 bis 20 ist und M_{α}⁺ ein Kation ist.

3. Verfahren zur Herstellung einer wässrigen fluorierten Polymerdispersion nach Anspruch 1 oder Anspruch 2, wobei das Monomer das fluorierte Monomer und gegebenenfalls ein Olefin enthält und das fluorierte Monomer mindestens ein Mitglied ist, ausgewählt aus der Gruppe, bestehend aus Tetrafluorethylen, Vinylidenfluorid, Hexafluorpropylen, einem Perfluoralkylvinylether und Chlortrifluorethylen.

4. Verfahren zur Herstellung einer wässrigen fluorierten Polymerdispersion nach Anspruch 3, wobei das Monomer Tetrafluorethylen und Propylen enthält.

5. Verfahren zur Herstellung einer wässrigen fluorierten Polymerdispersion nach einem der Ansprüche 1 bis 4, wobei das fluorierte Polymer ein fluoriertes elastisches Polymer ist.

6. Verfahren zur Herstellung einer wässrigen fluorierten Polymerdispersion nach Anspruch 5, wobei der elastische Speichermodul G' des fluorierten elastischen Polymers mindestens 530 kPa beträgt.

7. Verfahren zur Herstellung einer wässrigen fluorierten Polymerdispersion nach einem der Ansprüche 1 bis 6, wobei die Menge des verwendeten anionischen Kohlenwasserstoffemulgators von 0,001 bis 5 Masseteile pro 100 Masseteile des wässrigen Mediums beträgt.

## Revendications

1. Procédé pour produire une dispersion aqueuse de polymère fluoré, qui comprend la soumission d'un monomère contenant au moins un monomère fluoré à une polymérisation en émulsion en présence d'un émulsionnant anionique hydrocarboné ayant une concentration critique de micelles d'au plus 0,09 % en masse, telle que mesurée à 25°C par le procédé de tension de surface, dans un milieu aqueux, pour produire une dispersion aqueuse d'un polymère fluoré,
dans lequel l'émulsionnant anionique hydrocarboné est au moins un membre choisi dans l'ensemble constitué par un éther-sulfate d'alkyle polyoxyéthyléné et un sulfosuccinate de dialkyle, représenté par la formule (1) ou (2) suivante :
R^{α}O(CH₂CH₂O)ₘSO₃⁻M_{α}⁺ (1)
dans laquelle R^{α} est un groupe alkyle en C₄ à C₂₄, m est un entier de 2 à 20, et M_{α}⁺ est un cation ; 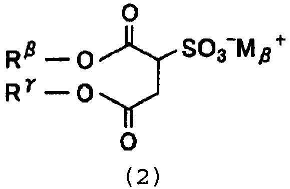
dans laquelle chacun de R^{β} et R^{γ}, qui sont indépendants l'un de l'autre, est un groupe cycloalkyle en C₄ à C₁₂, et M_{β}⁺ est un cation,
dans lequel l'émulsionnant anionique hydrophobe n'est pas le sulfosuccinate de dicyclohexyle sodique.

2. Procédé pour produire une dispersion aqueuse de polymère fluoré selon la revendication 1, dans lequel l'émulsionnant anionique hydrocarboné est un éther-sulfate d'alkyle polyoxyéthyléné représenté par la formule (1) suivante :
R^{α}O(CH₂CH₂O)ₘSO₃⁻M_{α}⁺ (1)
dans laquelle R^{α} est un groupe alkyle en C₄ à C₂₄, m est un entier de 2 à 20, et M_{α}⁺ est un cation.

3. Procédé pour produire une dispersion aqueuse de polymère fluoré selon la revendication 1 ou la revendication 2, dans lequel le monomère contient le monomère fluoré et, le cas échéant, une oléfine, et le monomère fluoré est au moins un membre choisi dans l'ensemble constitué par le tétrafluoroéthylène, le fluorure de vinylidène, l'hexafluoropropylène, un perfluoroalkylvinyléther et le chlorotrifluoroéthylène.

4. Procédé pour produire une dispersion aqueuse de polymère fluoré selon la revendication 3, dans lequel le monomère contient du tétrafluoroéthylène et du propylène.

5. Procédé pour produire une dispersion aqueuse de polymère fluoré selon l'une quelconque des revendications 1 à 4, dans lequel le polymère fluoré est un polymère élastique fluoré.

6. Procédé pour produire une dispersion aqueuse de polymère fluoré selon la revendication 5, dans lequel le module élastique au stockage G' du polymère élastique fluoré est d'au moins 530 kPa.

7. Procédé pour produire une dispersion aqueuse de polymère fluoré selon l'une quelconque des revendications 1 à 6, dans lequel la quantité de l'émulsionnant anionique hydrocarboné utilisé est de 0,001 à 5 parties en masse pour 100 parties en masse du milieu aqueux.
